# EUROPEAN PATENT APPLICATION

(11) **EP 4 748 709 A1**
(43) Date of publication of application: **27.05.2026**
(21) Application number: 25184760.4
(22) Date of filing: 24.06.2025
(51) Int. Cl.: B64C 13/30, B64C 13/40, B64C 13/50

(54) **AN ACTUATOR MECHANISM**

(30) Priority: 26.11.2024 TR 2024016865
(71) Applicant: Tusas- Turk Havacilik Ve Uzay Sanayii Anonim Sirketi, 06980 Ankara (TR)
(72) Inventor: Yavuz, Abdi Orhan, 06980 Ankara (TR)
(74) Representative: Berkkam, Ayfer

(57) **Abstract**

The present invention relates to a body (G), at least one rotary part (2) arranged on the body (G) and rotatably connected relative to the body (G), at least one bracket (S) located on the body (G), at least one support rod (3) pivotably connected to the bracket (S), at least one actuator (4) connected to the rotary part (2), which is a trigger exerting a force along the direction along which it extends, and which causes the rotary part (2) to rotate, at least one reaction rod (5) which is a structural part connected at one end to the rotary part (2) and at the other end to the support rod (3), at least one shaft (6) rotating with the rotary part (2) about the axis along which it extends, in order to rotate the rotary part (2), a first lever (7), which is a structural part extending outwardly from the shaft (6) and connected to the actuator (4), allowing the force of the actuator (4) to be transmitted to the shaft (6).

## Description

The present invention relates to an actuator mechanism suitable for use in aircraft, in particular for aerodynamic surfaces.

In applications such as flight control surfaces and flap mechanisms, the slider-crank mechanism is often used, which is a special version of the four-lever mechanism. In this mechanism, there is a linear actuator and a rotating surface or cover. Between the actuator and the cover there is an arm that forms the moment arm. In this mechanism, the system is usually asymmetric as the force is transmitted through a single lever, and if the actuator is positioned close to the external geometry, a form-compatible protrusion extends over the aerodynamic surface to cover the protrusion caused by the moment arm and to create minimal aerodynamic drag. The aforementioned protrusion leads to an increase in drag and the formation of undesirable geometries on the aerodynamic surface in aircraft such as airplanes. In addition, since crank connecting rod mechanisms transmit actuator loads directly to the mechanism structure, the dimensions of the structural part where the mechanism is connected to the aircraft have to be relatively large. As an alternative to the crank connecting rod mechanism, reaction link mechanisms can be used in the art. In these mechanisms, although the load transferred to the aircraft structure is greatly reduced, there is a need for protrusion due to the asymmetric arm.

In the patent document originating in the United States of America numbered US10493703B2, which is included in the state of the art, a force transmission element, an aircraft reaction link, a supporting structure for a flight control surface drive unit, an assembly method of the force transmission element and a manufacturing method of the aircraft reaction link are mentioned. The invention relates to a supporting structure for a force transmission element, an aircraft reaction link, a flight control surface drive unit, a method for assembling a force transmission element, and a method for manufacturing an aircraft reaction link which makes it possible to reduce weight while meeting the necessary requirements. The flight control surface actuation unit includes an actuator for actuating the flight control surface and a reaction link for withstanding a reaction force from the flight control surface when the actuator actuates the flight control surface. The reaction link is mentioned as it may be an example of an aircraft reaction link. The actuator is connected to the support provided on the wing and to the connecting shaft of the flight control surface. The actuator rotates the flight control surface around the fulcrum shaft supporting the flight control surface. The flight control surface is rotatably attached relative to the wing. The actuator is a linear actuator of hydraulic type.

In the patent document originating in the United States of America, US4595158, which is included in the state of the art, the aircraft control surface triggering and stabilization is mentioned. The piston rod of the lanyard is pivotably connected to both the lower end of the support link and the inner end of the reaction link for axial movement on the axis. The outer end of the reaction link is pivotally attached to the control surface on the axis coinciding with the surface hinge axis. The outer end of the second reaction link is pivotably connected to the surface for axial movement about an axis that lies on the centerline of the surface. The inner end of the reaction link is pivotally attached to the housing for rotational movement about the axis. The link is mounted so that the rocking motion of the link moves the pivot axis along an arc passing through the surface hinge. A jack-type actuator is internally connected between the lower front of the surface and the reaction link.

An actuator mechanism developed with this invention allows for relatively low drag without the use of aerodynamic protrusions.

Another aim of the invention is to realize a robust design by ensuring that the internal forces generated within the mechanism itself are relatively low.

A further object of the invention is to realize an actuator mechanism in which the control surface can rotate over relatively large sweep angles thanks to the relatively high torque obtained.

A further object of the invention is to realize an actuator mechanism in which the moment arm is shortened.

The actuator mechanism defined in the first claim and the claims dependent thereon, which is realized in order to achieve the object of the invention, comprises a body which provides the bearing of the system and is fixedly located. The rotary part is located on the body and is rotatably connected to the body at an angle predetermined by the manufacturer. The bracket is fixed on the body. A longitudinal connector passes through the holes in the bracket. The support rod is freely rotatable around the axis along which the coupler on the bracket extends. The actuator is a linear actuator, a force generator that can extend and shorten. The actuator is connected to the freely moving rotary part and allows the rotary part to rotate and move spatially. The reaction rod is structurally connected at one end to the rotary part and at the other end to the support rod. The first lever rotates the shaft and the rotary part connected to the shaft. By rotating the shaft, the rotary part connected to the shaft rotates together. The first lever is the structural part extending upwards from the shaft and is connected to the end of the actuator to transfer the actuator force to the shaft.

The inventive actuator mechanism comprises actuators. The actuator is attached to the support rod, which is the part that can rotate freely to move the support rod. In this way, when the actuator is triggered, it rotates at different angles simultaneously with the support rod. The actuator mechanism includes a second lever. One end of the second lever is connected to the shaft, while the other end is structurally connected to the reaction rod. This allows the reaction rod to apply additional moment to the shaft in the same direction as the moment direction provided by the lengthening and shortening of the actuator. In this way, since the moment that the first lever has to apply is reduced, the strut distance between the end of the first lever and the direction in which the shaft extends along its length is shortened and there is no need to form a bumper on the rotating part. By strut distance is meant the force arm for moment generation. In addition, the use of a reaction link means that the load transferred by the bracket to the body is subjected to relatively low stresses on the bearing and on the shaft that allows the rotary part to rotate. Since the first lever and the second lever are connected to the shaft through the same interface, they act on the shaft simultaneously.

In one embodiment of the invention, the actuator mechanism comprises a first lever body. The first lever body is located on the first lever. The first lever body is connected to the shaft so as to encircle the shaft and extend upwardly from the shaft. The actuator mechanism comprises the first lever end. The first lever end is located on the first lever. The first lever end includes a longitudinally extending coupler. The actuator is rotatably connected to the connector at the first lever end. The actuator mechanism comprises a second lever body. The second lever body is located on the second lever. The second lever body is connected to the shaft in such a way that it encircles the shaft and extends downwards in the opposite direction to the shaft from the direction in which the first lever body extends.

The actuator mechanism includes a second lever end. At the second lever end there is a longitudinal coupler. The reaction rod is rotatably connected to the coupler at the second lever end. The perpendicular distance between the first lever end and the longitudinal direction of the shaft and the perpendicular distance between the second lever end and the longitudinal direction of the shaft are almost equal. In this way, the moment applied to the shaft from the top through the first lever body and from the bottom through the second lever body is transferred in such a way as to create relatively low stress on the first lever and the second lever.

In one embodiment of the invention, the actuator mechanism comprises a support rod first end. The support rod first end is located on the support rod and is the distal end of the support rod closest to the shaft. The actuator is rotatably movable around the coupler connected to the first end of the support rod. The actuator mechanism includes the second end of the support rod. The second end of the support rod is located on the support rod. The second end of the support rod is located between the first end of the support rod and the bracket. The reaction link is rotatably connected around the connector connected to the second end of the support rod.

In one embodiment of the invention, the actuator mechanism comprises an actuator. The actuator is structurally connected at one end to the first end of the support rod and at the other end to the first lever end. The actuator is mounted to the first end of the support rod by means of a coupler and is rotatably connected about the axis along which the coupler extends, so that the first end of the support rod to which the actuator is connected is spatially displaced between a first position (I) and a second position (II).

In one embodiment of the invention, the actuator mechanism comprises a support rod support. The support rod bracket is a fastener. The support rod support is attached to the holes in the bracket, allowing the support rod to rotate freely.

In one embodiment of the invention, the actuator mechanism is triggered by shortening the length of the actuator, the first lever end is rotated counterclockwise with respect to the shaft, the support rod is rotated clockwise around the support rod support, the first end of the support rod is rotated clockwise, the second end of the support rod and the second lever end are forced to move positively, and the reaction rod is subjected to compression load, so that the reaction rod forces the second lever end to rotate counterclockwise. Thus, the rotary part is brought to a first position (I) by rotating the shaft counterclockwise around its axis. The first lever end is rotated clockwise relative to the shaft by extending the length of the actuator, the support rod is rotated counterclockwise around the support rod support, the first end of the support rod is rotated counterclockwise, the second end of the support rod and the second lever end are forced to move positively, and the reaction rod is subjected to tensile load, so that the reaction rod forces the second lever end to rotate clockwise by the principle of reaction to action. Thus, the shaft is rotated clockwise around its axis to bring the rotary part to a second position (II) predetermined by the user, where it is at an angle different from the angle at the first position (I). The second position (II) is the position where the rotary part is brought to a positive or negative angle of attack to maneuver the aircraft.

In one embodiment of the invention, the actuator mechanism comprises a reaction rod. The ends of the reaction rod are connected to the second end of the support rod and the second lever end. By forcing the second end of the support rod and the second lever end to change position by different amounts between the first position (I) and the second position (II), the reaction rod provides an additional force and moment generating function for the system. In this way, since the moment arm distance between the first lever end and the center of the shaft is shortened, the first lever end does not need to protrude relative to the fuselage, results in a more aerodynamic wing and moving surface with much less drag. The expression "almost linear extension of the fuselage to the rotating part" means that the outer surface of the fuselage and the outer surface of the rotary part form a continuous surface without any protrusion.

In one embodiment of the invention, the actuator mechanism comprises a first end of a support rod to which the actuator mechanism is connected and an actuator whose first lever end is movable between the first position (I) and the second position (II). As both ends of the actuator are connected to the movable portions, free rotation of the support rod is ensured. As both ends of the actuator are movable, the actuator can operate at low stresses.

In one embodiment of the invention, the actuator mechanism kinematically comprises an actuator in which the support rod is kinematically coupled to the bracket about the support rod bracket and the shaft is rotatably coupled to the housing about the axis along which the shaft extends, thereby enabling the rotary part to move over a wide range of angles with low forces. The support rod support is a fastener. The support rod support is located along the length of the bracket. The support rod can rotate freely around the support rod bracket as it is of the ball joint type. The support rod bracket and the shaft run along directions parallel to each other. Thus, out-of-plane forces and/or moments do not occur and the stresses acting on the system are relatively low and the system can move along relatively large angles predetermined by the manufacturer.

In one embodiment of the invention, the actuator mechanism comprises a rotary part in which the actuator and the reaction rod are kinematically connected to the support rod, the first lever end and the second lever end in a spherical joint type, whereby the rotary part moves over a wide range of angles with relatively low stresses. Kinematically, the actuator is connected to the first end of the support rod in a spherical joint type. Kinematically, the actuator is connected to the first lever end in a spherical joint type. Kinematically, the reaction rod is connected to the second end of the support rod in a spherical joint type. Kinematically, the reaction link is connected to the second lever end in a spherical joint type.

In one embodiment of the invention, the actuator mechanism comprises a support rod selected by the manufacturer of a predetermined length. It is ensured that the first end of the support rod is at substantially the same height as the shaft along the first position (I) and the second position (II). The second end of the support rod is ensured to be at substantially the same height as the shaft along the first position (I) and the second position (II). The length of the support rod, the working range angles of the support rod are predetermined by the manufacturer according to the lengths of the components mounted on the support rod. This contributes to the stresses acting on the components in the system being as close to each other as possible.

In one embodiment of the invention, the actuator mechanism comprises an actuator connected by a rod end. The use of the ball joint enables the rotating part, the support rod, the actuator and the reaction rod to move between the first position (I) and the second position (II) without any movement restriction. Thanks to the degree of freedom allowed by the ball joint and the range of angles that the ball joint itself can rotate, it moves efficiently between the first position (I) and the second position (II).

In one embodiment of the invention, the actuator mechanism comprises a support rod spacing extending in the form of two plates and a gap between the plates. By bifurcated structure is meant the geometry of the two plates extending opposite each other and having a gap between them. The support rod spacing provides an interface for mounting the system components and provides additional lightness.

In one embodiment of the invention, the actuator mechanism comprises a fuselage which is a wing in an aircraft. The fuselage allows the bearing of the bracket. The rotary part is a control surface with a flap, which rotates relative to the fuselage or wing at an angle of attack predetermined by the manufacturer. The rotation of the rotary part provides the necessary maneuvering effect to the aircraft.

In one embodiment of the invention, the actuator mechanism comprises a first lever and a second lever which are different portions of the same part. The first lever and the second lever have a common opening, said common opening being connected to a shaft. There is a moment transmission system between the shaft and the aforementioned common opening. The first lever is connected to the shaft from the upper side and the second lever is connected to the shaft from the lower side, so that the moment is obtained in the same direction for the shaft. Between the extremes of motion, first position (I) and second position (II), the first end of the support rod and the first lever end are almost at the same height. Between the extreme points of the movement, the first position (I) and the second position (II), the second end of the support rod and the second lever end are located at almost the same height.

The actuator mechanism for achieving the object of the present invention is shown in the accompanying figures;

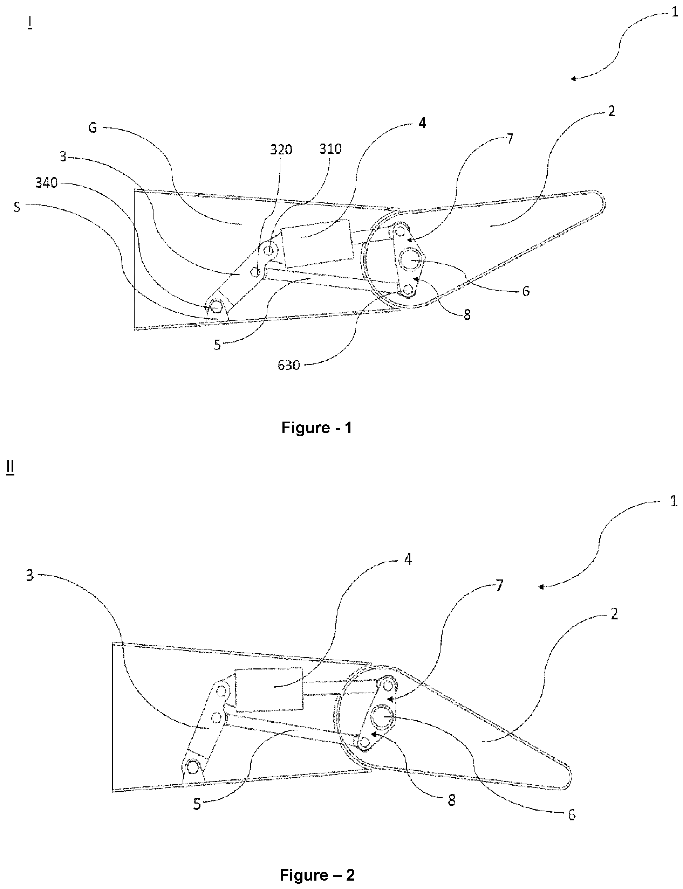

Figure 1 - Side view of the actuator mechanism in the first position (I).
Figure 2 - Side view of the actuator mechanism in the second position (II).

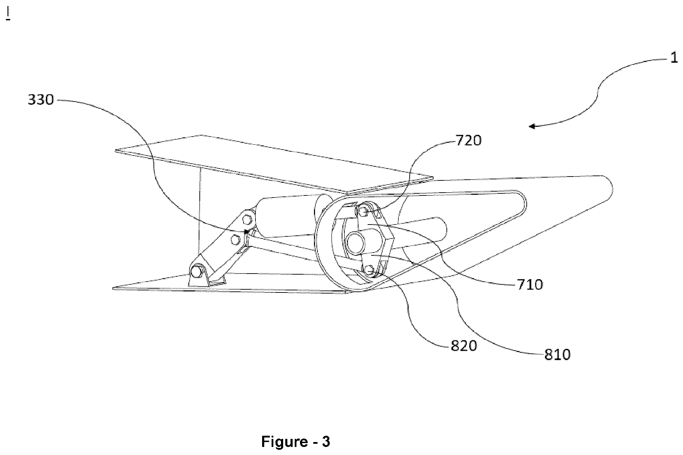

Figure 3 - Perspective view of the actuator mechanism in the first position (I).

The parts in the figures are numbered one by one and the corresponding numbers are given below.
1. Actuator Mechanism
2. Rotary Part
3. Support Rod
   310. Support Rod First End
   320. Support Rod Second End
   330. Support Rod Spacing
   340. Support Rod Bracket
4. Actuator
5. Reaction Rod
6. Shaft
7. First Lever
   710. First Lever Body
   720. First Lever End
8. Second Lever
   810. Second Lever Body
   820. Second Lever End
G. Body
S. Bracket
(I) First Position
(II) Second Position

The actuator mechanism (1) comprises a body (G), at least one rotary part (2) on the body (G) and rotatably connected relative to the body (G), at least one bracket (S) on the body (G), at least one support rod (3) rotatably connected to the bracket (S), at least one actuator (4) which is a trigger exerting a force along the direction along which it extends, which is connected to the rotary part (2) and causes the rotary part (2) to rotate, at least one reaction rod (5), which is a structural part connected at one end to the rotary part (2) and at the other end to the support rod (3), at least one shaft (6) rotating with the rotary part (2) about the axis along which it extends to rotate the rotary part (2), a first lever (7), which is a structural part extending outwardly from the shaft (6) and connected to the actuator (4) and allowing the force of the actuator (4) to be transferred to the shaft (6) (Figure -1, Figure -2).

The inventive actuator mechanism (1) comprises an actuator (4) connected to the support rod (3) for moving the support rod (3), whereby the actuator (4) moves together with the support rod (3), one end connected to the shaft (6) and the other end connected to the reaction rod (5), It includes a second lever (8), which allows the reaction rod (5) to apply additional torque to the shaft (6) in the same direction as the actuator (4), thus improving the aerodynamics of the body (G) and ensuring efficient bearing of the bracket (S) and the rotary part (2) (Figure -1, Figure -2).

A linear type actuator (4) is used as actuator (4). The reaction rod (5) is preferably a cylindrical longitudinal tube. The reaction rod (5) is selected from a rigid material. The use of the support rod (3) and the reaction rod (5) ensures that the stresses to which the bracket (S) and the body (G) are subjected are relatively low. The shaft (6) and the rotary part (2) rotate together and in equal angles. The shaft (6) extends in a longitudinal direction parallel to the longitudinal direction of the rotary part (2). The shaft (6) has a cylindrical form. The first lever (7) functions as a moment arm (Figure -1, Figure -2), which allows the linear force generated by the actuator (4) to generate a rotational moment for the shaft (6) and the rotary part (2).

The end of the actuator (4) connected to the support rod (3) is the movable end, so that both ends to which it is connected move when the length of the actuator (4) changes. The second lever (8) is connected to the shaft (6) from the other side of the first lever's (7) connection side to the shaft (6). The reaction rod (5) has the function of generating force by connecting both ends of the reaction rod (5) to the spatially moving support rod (3) and the second lever (8). The force generated in the reaction rod (5) creates a moment effect for the shaft (6) and rotation of the rotary part (2) thanks to the second lever (8) acting as a moment arm for the shaft (6) (Figure -1, Figure -2).

In one embodiment of the invention, the actuator mechanism (1) comprises a first lever body (710) extending outwardly from the shaft (6), connected to the shaft (6) so as to encircle the shaft (6), which is located on the first lever (7), a first lever end (720) located on the first lever (7), the point at which the actuator (4) is pivotably connected to the first lever body (710), a second lever (8) located on the second lever (8), connected to the shaft (6) so as to encircle the shaft (6), a second lever body (810) extending outwardly from the shaft (6) in a direction opposite to the direction in which the first lever body (710) extends with respect to the shaft (6), the second lever (8) being the point on the second lever (8) at which the reaction rod (5) is rotatably connected to the second lever body (810), A second lever end (820), which is positioned such that the first lever end (720) is substantially symmetrical with respect to the shaft (6), thereby enabling the moment applied to the shaft (6) from either side to be transmitted to the first lever (7) and the second lever (8) in a low-stress manner. The first lever body (710) and the first lever end (720) are provided as a single piece. The first lever body (710) and the first lever end (720) have a common hole interface, and are connected to the shaft (6) through said common hole interface, so that the moments acting on the first lever body (710) and the first lever end (720) are transferred to the shaft (6) in such a way that moments in the same direction are generated and transferred simultaneously. The first lever end (720) and the second lever end (820) are positioned almost symmetrically and in opposite directions with respect to the shaft (6), so that the moment magnitudes acting on the shaft (6) from both sides are close to each other (Figure -3).

In one embodiment of the invention, the actuator mechanism (1) comprises a support rod first end (310) of the support rod (3), positioned on the support rod (3), being substantially the most distal end of the support rod (3) relative to the bracket (S), around which the actuator (4) is rotatably connected, and a support rod second end (320) of the support rod (3), positioned between the support rod first end (310) of the support rod (3) and the bracket (S), around which the reaction rod (5) is rotatably connected. There is a distance between the first end of the support rod first end (310) and the second end of the support rod (320), so that the actuator (4) and the reaction rod (5) are connected to the support rod (3) in the same plane (in-plane), thus avoiding out-of-plane loads and moments in the system (Figure -1, Figure -2).

In one embodiment of the invention, the actuator mechanism (1) comprises an actuator (4) having one end connected to the support rod first end (310) of the support rod and the other end connected to the first lever end (720), the support rod first end (310) of the support rod being rotatably connected about the axis on which it is supported, and the support rod first end (310) of the support rod being positively displaced. In this way, both ends to which the actuator (4) is connected are fixed to the movable ends, allowing the support rod (3) to move while the actuator (4) moves between the first position (I) and the second position (II). The actuator (4) is connected to the ends to which it is attached by means of connectors, and is free to rotate around the axis along which the connectors extend (Figure -1, Figure - 2).

In one embodiment of the invention, the actuator mechanism (1) comprises a support rod bracket (340), which is a bracket to which the support rod (3) is freely rotatably connected to the bracket (S). The support rod (3) is connected to the bracket (S) by means of a coupler, the support rod (3) being freely rotatable about the axis along which the coupler extends. The forces acting on the system are transferred to the bracket (S) through the coupler and from the bracket (S) to the body (G) (Figure -1, Figure -2).

In one embodiment of the invention, the actuator mechanism (1) is a mechanism in which the first lever end (720) is rotated counterclockwise relative to the shaft (6) by triggering the actuator (4) by shortening its length, the support rod (3) is rotated clockwise around the support rod bracket (340) and the support rod first end (310) of the support rod is rotated clockwise, a first position (I) in which the support rod second end (320) of the support rod and the second lever end (820) subject the reaction rod (5) to a compression load, causing the reaction rod (5) to rotate the second lever end (820) in a counterclockwise direction, thereby rotating the shaft (6) in a counterclockwise direction about its axis and bringing the rotary part (2), the first lever end (720) is rotated clockwise relative to the shaft (6) by extending the length of the actuator (4) and triggering it, the support rod (3) is rotated counterclockwise around the support rod bracket (340) and the support rod first end (310) of the support rod is rotated counterclockwise, a second position (II) wherein the support rod second end (320) of the support rod and the second lever end (820) subject the reaction rod (5) to a tensile load, causing the reaction rod (5) to rotate the second lever end (820) clockwise, thereby rotating the shaft (6) clockwise about its own axis, the rotary part (2) being at an angle predetermined by the user and different from the angle in the first position (I). The two ends to which the reaction rod (5) is connected to the reaction rod (5) by the principle of reaction to action, namely the second end of the support rod (320) and the second lever end (820), move in different amounts, thus creating stress on the reaction rod (5), thus the reaction rod (5) acts as a force generator that contributes to the rotation of the shaft (6) as a force generator (Figure -1, Figure -2, Figure -3).

In one embodiment of the invention, the actuator mechanism (1) comprises a reaction rod (5), acting as a secondary force generator by changing the position of the support rod second end (320) to which the reaction rod (5) is connected between the first position (I) and the second position (II) by different amounts and by changing the position of the second lever end (820) by different amounts. In this way, the reaction rod (5) allows the first lever end (720) to be located close to the shaft (6) and the body (G) to be subjected to low drag forces by virtue of the almost linear and aerodynamic extension of the body (G) towards the rotary part (2). In this way, the body (G) and the rotary part (2) are almost form-fit and contribute to the low aerodynamic drag forces acting on the body (G) as it does not have any aerodynamic protrusions. The reaction rod (5), which is a rigid part, thus acts as a force-generating component that generates force and contributes to the rotation of the shaft (6). The reaction rod (5) contributes to the system as an auxiliary force generator as a rigid rod, as well as enabling low structural forces to act (Figure -1, Figure -2).

In one embodiment of the invention, the actuator mechanism (1) comprises an actuator (4), wherein the support rod first end (310) of the support rod to which it is connected and the first lever end (720) are movable between the first position (I) and the second position (II). In this way, while the actuator (4) is triggered by the lengthening and shortening of the length of the actuator (4), the movement of the actuator (4) is ensured due to the fact that both ends to which it is connected between the first position (I) and the second position (II) are movable ends, so that the movement is effectively transferred to other components of the system (Figure -1, Figure -2).

In one embodiment of the invention, the actuator mechanism (1) comprises an actuator (4) in which the support rod (3) is kinematically connected to the bracket (S) around the support rod bracket (340) and the shaft (6) to the body (G) in a rotatable joint type around the axis along which the shaft (6) extends, thereby allowing the rotary part (2) to move in a wide range of angles with low forces. The use of rotary joints allows the degree of freedom to be predetermined by the manufacturer (Figure -1, Figure -2).

In one embodiment of the invention, the actuator mechanism (1) comprises a rotary part (2) in which the actuator (4) and the reaction rod (5) are kinematically connected to the support rod (3), the first lever end (720) and the second lever end (820) in a spherical joint type, whereby the rotary part (2) moves in wide angle ranges with low forces. The spherical joint provides flexibility to the connection. Out-of-plane loads can be tolerated. The use of a ball joint allows the degree of freedom to be predetermined by the manufacturer (Figure -1, Figure -2, Figure -3).

In one embodiment of the invention, the actuator mechanism (1) comprises a support rod (3) having geometrical dimensions such that the support rod first end (310) of the support rod and the support rod second end (320) of the support rod are substantially flush with the shaft (6) throughout the first position (I) and the second position (II). The length of the support rod (3) and its angle with respect to the bracket (S) in the first position (I) are predetermined by the manufacturer for the first position (I), which is the position where the system is first assembled, so that the support rod first end (310) and the support rod second end (320) remain almost along the same direction with the shaft (6) in the first position (I) and second position (II), thus contributing to the close proximity of the loads acting on the system and contributing to a robust system (Figure -1, Figure -2).

In one embodiment of the invention, the actuator mechanism (1) comprises an actuator (4) which, thanks to the use of a ball joint for a type of ball joint connection, contributes to a continuous movement of the rotary part (2), the support rod (3), the actuator (4) and the reaction rod (5) between the first position (I) and the second position (II), and which moves between the first position (I) and the second position (II) with continuous motion, thanks to the degree of freedom and angle compensation enabled by the ball joint. The ball joint provides flexibility to the connection. Out-of-plane loads can be tolerated (Figure -1, Figure -2).

In one embodiment of the invention, the actuator mechanism (1) comprises a support rod spacing (330) on the support rod (3) with a gap between the clevis structure extending from both sides, thereby providing light weight. The clevis structure with a gap between them is provided by two plate-shaped sheet metal parts extending from opposite sides, providing a lightweight design suitable for structural assembly. The actuator (4) and the reaction rod (5) are structurally connected to the support rod (3) through the gap between the aforementioned sheet metal parts (Figure -3).

In one embodiment of the invention, the actuator mechanism (1) comprises a body (G), which is a wing providing lift, and a rotary part (2), which is a control surface rotatably connected to the wing. In this way, the body (G), which is the aircraft, is both lightweight and the rotary part (2), which is the control surface, can rotate in a wide-angle sweep between the first position (I) and the second position (II) (Figure -1, Figure -2).

In one embodiment of the invention, the actuator mechanism (1) comprises a second lever (8) which is monolithic with the first lever (7), connected to the shaft (6) through a common connection interface, the rotary part (2) allowing the support rod first end (310) of and the support rod second end (320) of the support rod to be opposed to the first lever end (720) and the second lever end (820) between the first position (I) and the second position (II). The first lever (7) and the second lever (8) are provided as a one-piece having a common opening, the first lever (7) and the second lever (8) being connected to the shaft (6) through said opening. The first lever (7) and the second lever (8) extend in opposite directions with respect to each other and the shaft (6), with the shaft (6) between them (Figure -1, Figure - 2).

## Claims

1. An actuator mechanism (1), **comprising** a body (G), at least one rotary part (2) located on the body (G) and rotatably connected relative to the body (G), at least one bracket (S) located on the body (G), at least one support rod (3) pivotably connected to the bracket (S), at least one actuator (4) connected to the rotary part (2), which is a trigger applying a force along the direction along which it extends, and which causes the rotary part (2) to rotate, at least one reaction rod (5), which is a structural part connected at one end to the rotary part (2) and at the other end to the support rod (3), at least one shaft (6) rotating together with the rotary part (2) about the axis along which it extends, for rotating the rotary part (2), a first lever (7), which is a structural part extending outwards from the shaft (6) and connected to the actuator (4), allowing the force of the actuator (4) to be transmitted to the shaft (6) **characterized by** actuator (4) connected to the support rod (3) to move the support rod (3), so that it moves together with the support rod (3), one end connected to the shaft (6) and the other end connected to the reaction rod (5), a second lever (8), which allows the reaction rod (5) to apply additional torque to the shaft (6) in the same direction as the actuator (4), thereby improving the aerodynamics of the body (G) and ensuring effective bearing of the bracket (S) and the rotary part (2).

2. An actuator mechanism (1) as in claim 1, **characterized by** a first lever body (710) extending outwardly from the shaft (6), connected to the shaft (6) so as to encircle the shaft (6), located on the first lever (7), a first lever end (720) located on the first lever (7), wherein the actuator (4) is rotatably connected to the first lever body (710), a second lever body (810) located on the second lever (8), connected to the shaft (6) so as to encircle the shaft (6), extending outwardly from the shaft (6) in a direction opposite to that of the first lever body (710) with respect to the shaft (6), a second lever end (820) located on the second lever (8), at the point where the reaction rod (5) is rotatably connected to the second lever body (810), positioned so that the first lever end (720) is almost symmetrical with respect to the shaft (6), thereby allowing the moment applied to the shaft (6) from both sides to be transmitted in such a way as to create low stress in the first lever (7) and the second lever (8).

3. An actuator mechanism (1) as in claim 1 or 2, **characterized by** a support rod first end (310) of the support rod (3), which is located on the support rod (3), being a first end of the support rod (3) which is substantially the furthest end of the support rod (3) with respect to the bracket (S), around which the actuator (4) is rotatably connected, a support rod second end (320) located on the support rod (3), positioned between the support rod first end (310) and the bracket (S), around which the reaction rod (5) is rotatably connected.

4. An actuator mechanism (1) as in claim 3, **characterized by** an actuator (4) having one end connected to the support rod first end (310) of the support rod and the other end connected to the first lever end (720), rotatably connected to the support rod first end (310) of the support rod about the axis on which it is supported, and positively displacing the support rod first end (310) of the support rod.

5. An actuator mechanism (1) as in any one of the preceding claims, **characterized by** the support rod (3) is a support rod bracket (340), which is the bracket to which the support rod (3) is freely rotatably connected to the bracket (S).

6. An actuator mechanism (1) as in claim 5, **characterized by** when the actuator (4) is triggered by shortening its length, the first lever end (720) is rotated counterclockwise relative to the shaft (6), the support rod (3) is rotated clockwise around the support rod bracket (340) and the support rod first end (310) of the support rod is rotated clockwise, a first position (I) in which the support rod second end (320) of the support rod and the second lever end (820) subject the reaction rod (5) to a compression load, causing the reaction rod (5) to rotate the second lever end (820) in a counterclockwise direction, thereby rotating the shaft (6) in a counterclockwise direction about its axis and bringing the rotary part (2), the first lever end (720) is rotated clockwise relative to the shaft (6) by extending the length of the actuator (4) and triggering it, the support rod (3) is rotated counterclockwise around the support rod bracket (340) and the support rod first end (310) of the support rod is rotated counterclockwise, the support rod second end (320) and the second lever end (820) subjecting the reaction rod (5) to a tensile load, whereby the reaction rod (5) rotates the second lever end (820) clockwise, thereby rotating the shaft (6) clockwise about its axis, and a second position (II) **characterized in that** the rotary part (2) is at an angle predetermined by the user and different from the angle in the first position (I).

7. An actuator mechanism (1) as in claim 6, **characterized by** a reaction rod (5), acting as a secondary force generator by changing the position of the support rod second end (320) to which the reaction rod (5) is connected between the first position (I) and the second position (II) by different amounts and by changing the position of the second lever end (820) by different amounts, thanks to this, reaction rod (5) allows the first lever end (720) to be located close to the shaft (6) and the body (G) to be subjected to low drag forces by virtue of the almost linear and aerodynamic extension of the body (G) towards the rotary part (2).

8. An actuator mechanism (1) as in claim 6 or claim 7, **characterized by** the actuator (4) moves between the first position (I) and the second position (II) of the support rod first end (310) and the first lever end (720) to which it is connected.

9. An actuator mechanism (1) as in any one of claims 5-8, **characterized by** an actuator (4) kinematically coupling the support rod (3) to the bracket (S) about the support rod bracket (340) and the shaft (6) to the body (G) in a pivotable joint type about the axis along which the shaft (6) extends, thereby allowing the rotary part (2) to move in a wide range of angles with low forces.

10. An actuator mechanism (1) as in any one of claims 2 to 9, **characterized by** a rotary part (2) in which the actuator (4) and the reaction rod (5) are kinematically connected to the support rod (3), the first lever end (720) and the second lever end (820) in a spherical joint type, whereby the rotary part (2) moves in a wide range of angles with low forces.

11. An actuator mechanism (1) as in any one of claims 6 to 10, **characterized by** a support rod (3) manufactured with geometric dimensions such that the support rod first end (310) of the support rod second end (320) of the support rod is substantially flush with the shaft (6) throughout the first position (I) and the second position (II).

12. An actuator mechanism (1) as in any one of claims 6 to 11, **characterized by** an actuator (4) which, thanks to the use of a ball joint for the ball joint connection type, contributes to a continuous movement of the rotary part (2), the support rod (3), the actuator (4) and the reaction rod (5) between the first position (I) and the second position (II), the actuator (4) moving between the first position (I) and the second position (II) as continuous motion due to the degree of freedom and angle compensation enabled by the ball joint.

13. An actuator mechanism (1) as in any one of the preceding claims, **characterized by** a support rod spacing (330) located on the support rod (3), which is a space between the clevis structure extending from both sides, thereby providing light weight.

14. An actuator mechanism (1) as in any one of the preceding claims, **characterized by** a body (G) in the aircraft, which is a wing providing lift, a rotary part (2) in the aircraft, which is a control surface rotatably connected to the wing.

15. An actuator mechanism (1) as in any one of claims 6 to 14, **characterized by** a second lever (8) one-piece with the first lever (7), connected to the shaft (6) via a common connection interface, the rotary part (2) allowing the support rod first end (310) of the support rod second end (320) of the support rod to be opposed to the first lever end (720) and the second lever end (820) between the first position (I) and the second position (II).
